# EUROPEAN PATENT SPECIFICATION

(11) **EP 4 610 963 B1**
(45) Date of publication and mention of the grant of the patent: **23.09.2026**
(21) Application number: 24188076.4
(22) Date of filing: 11.07.2024
(51) Int. Cl.: G09B 5/04, G09B 5/06

(54) **READING MATERIAL SOUNDING BY INDUCTION**
LESEN VON MATERIALLOTUNG DURCH INDUKTION
LECTURE DE SONDAGE DE MATÉRIAU PAR INDUCTION

(30) Priority: 27.02.2024 CN 202420371531 U
(43) Date of publication of application: 03.09.2025
(73) Proprietor: Heshan Astros Printing Ltd., Heshan, Guangdong 529700 (CN); Leo Paper Bags Manufacturing (1982) Limited, Kowloon (HK)
(72) Inventor: MAI, Jiajie, Kowloon (HK); CAI, Ruohua, Guangdong, 529700 (CN); LI, Boli, Guangdong, 529700 (CN)
(74) Representative: Oryon NV

(56) References cited:
- CN-A- 105 336 225
- CN-A- 110 782 713
- CN-U- 213 339 187
- CN-U- 214 042 646
- CN-U- 214 098 740

## Description

### TECHNICAL FIELD

The present application relates to the technical field of reading materials manufacturing, and more particularly, to a reading material sounding by induction.

### BACKGROUND

Electronic books are educational materials that aid in the visual and auditory development of children. They are widely embraced by both parents and children. Currently available electronic books typically operate by pressing buttons to trigger sounds or music relevant to the content being read, enhancing the level of amusement and interaction compared to traditional reading materials. However, merely pressing buttons to play music can become monotonous, rendering the functionality of electronic books too simplistic, thereby hindering the enhancement of their amusement and interactivity.

CN213339187U discloses a rotating inductive sound-emitting book, including a book body and a trigger body. The book body is provided with a sound-emitting circuit. The book body is provided with an accommodating groove, the trigger body is provided with a trigger element, and the sound-emitting circuit is provided with a sensor matching the trigger element. The trigger element is placed in the accommodating groove to rotate. A user needs to rotate the trigger body. During the rotation of the trigger body, the trigger element triggers the sensor, thereby causing the sound-emitting circuit to play a sound so that the rotating inductive sound-emitting book emits a sound.

### SUMMARY

The present application aims to solve at least one of the technical problems in the existing technology. Therefore, the present application provides a reading material sounding by induction, where a hand of a child can extend into an inner chamber of a swingable member through an opening, and then an induction member can detect the hand of the child and emit a trigger signal, and a receiving member can trigger a sounding unit to sound after receiving the trigger signal emitted by the induction member, thus improving interactivity and amusement for the child when reading and enhancing reading sensory experience for the child.

The reading material sounding by induction provided according to the invention comprises: a book body and an inductive sounding assembly, where the book body is provided with an opening extending through the book body, a swingable member made of a soft material is arranged at the opening, and the swingable member is provided with an inner chamber communicating with the opening, where an outer end of the swingable member is provided with a styling member; the inductive sounding assembly comprises an induction member, a receiving member, a power supply and a sounding unit, the induction member is arranged in the swingable member; the receiving member, the power supply and the sounding unit are all arranged in the book body, the receiving member is electrically connected with the power supply, and the sounding unit is electrically connected with the receiving member; where, the inner chamber is configured to receive a hand of a user extending through the opening, such that the induction member is able to detect the hand of the user, when being triggered, the induction member is capable of emitting a trigger signal, and the receiving member is capable of receiving the trigger signal to trigger the sounding unit to sound.

The reading material sounding by induction provided according to some embodiments of the present application at least has the following beneficial effects. When reading, the hand of the child can extend into the inner chamber of the swingable member through the opening, and then the induction member can detect the hand of the child and emit the trigger signal, and the receiving member can trigger the sounding unit to sound after receiving the trigger signal emitted by the induction member, thus improving interactivity and amusement for the child when reading and enhancing reading sensory experience for the child. Moreover, the hand of the child can drive the swingable member to swing as a whole, which can not only increase touch comfort of the child and enhance sensory development, but also further improve interactivity with the child.

In the reading material sounding by induction provided according to some embodiments of the present application, the swingable member is made of a soft material.

In the reading material sounding by induction provided according to some embodiments of the present application, an outer end of the swingable member is provided with a styling member.

In the reading material sounding by induction provided according to some embodiments of the present application, the swingable member is capable of being accommodated in the opening.

In the reading material sounding by induction provided according to some embodiments of the present application, a back of the book body is provided with a mounting groove, and the power supply is mounted in the mounting groove.

In the reading material sounding by induction provided according to some embodiments of the present application, a cover is arranged at the back of the book body, and the cover is configured to cover an opening of the mounting groove to maintain the power supply in the mounting groove.

In the reading material sounding by induction provided according to some embodiments of the present application, a switch for controlling on-off of the power supply is arranged at the back of the book body.

In the reading material sounding by induction provided according to some embodiments of the present application, a rear side of the book body is provided with a plurality of sound outlets, and the sounding unit is arranged towards the sound outlets.

In the reading material sounding by induction provided according to some embodiments of the present application, an optical source and/or a vibrating member are/is arranged in the book body, the optical source and/or the vibrating member are/is electrically connected with the receiving member, and when the induction member is triggered, the receiving member is capable of receiving the trigger signal, to trigger the optical source and/or the vibrating member to respond.

In the reading material sounding by induction provided according to some embodiments of the present application, the inductive sounding assembly further comprises a changeover switch, the changeover switch is electrically connected to the sounding unit, and a sounding mode of the sounding unit is capable of being controlled by the changeover switch.

The additional aspects and advantages of the present application will be given in part in the following description, and will become apparent in part from the following description, or will be learned through the practice of the present application.

### BRIEF DESCRIPTION OF THE DRAWINGS

The additional aspects and advantages of the present application will be more apparent and readily appreciated from the following description of the embodiments in conjunction with the accompanying drawings, in which:
FIG. 1 is a front view of a reading material sounding by induction provided by some embodiments of the present application;

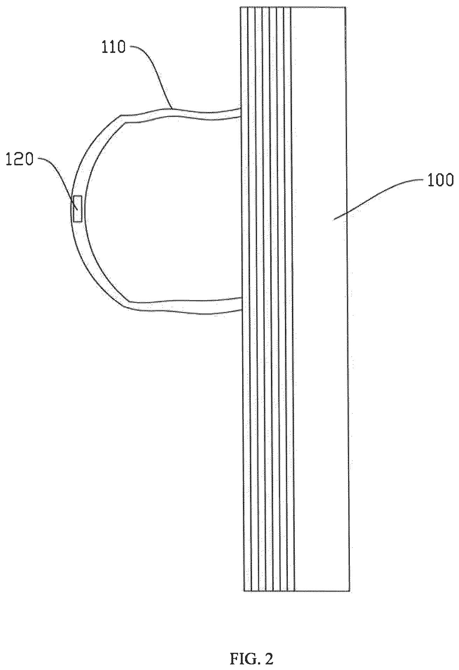

FIG. 2 is a side view of the reading material sounding by induction provided by some embodiments of the present application;
FIG. 3 is a schematic diagram showing a back structure of the reading material sounding by induction provided by some embodiments of the present application; and
FIG. 4 is a schematic diagram showing an internal structure of the reading material sounding by induction provided by some embodiments of the present application.

Reference numerals are as follows:
100 refers to book body; 110 refers to swingable member; 120 refers to induction member; 130 refers to receiving member; 140 refers to power supply; 150 refers to sounding unit; 160 refers to styling member; 170 refers to switch; and 180 refers to sound outlet.

### DETAILED DESCRIPTION

The embodiments of the present application will be described in detail hereinafter. Examples of the embodiments are shown in the drawings. The same or similar reference numerals throughout the drawings denote the same or similar elements or elements having the same or similar functions.

In the description of the present application, it should be understood that the orientation or positional relationship indicated by the terms upper, lower, front, back, left and right is based on the orientation or positional relationship shown in the drawings, only for the convenience of describing the present application and simplifying the description, and does not indicate or imply that the indicated device or element must have a specific orientation, or be constructed and operated in a specific orientation. Therefore, the terms should not be construed as limiting the present application.

In the description of the present invention, the terms such as first and second if described are used for the purpose of distinguishing the technical features only, and cannot be understood as indicating or implying relative importance, or implicitly indicating the number of technical features indicated thereby, or implicitly indicating the order of technical features indicated thereby.

In the description of the present application, unless otherwise explicitly defined, words such as setting, mounting and connecting should be understood in a broad sense, and those skilled in the art can reasonably determine the specific meanings of the above words in the present application in combination with the specific contents of the technical solutions.

Electronic books are educational materials that aid in the visual and auditory development of children. They are widely embraced by both parents and children. Currently available electronic books typically operate by pressing buttons to trigger sounds or music relevant to the content being read, enhancing the level of amusement and interaction compared to traditional reading materials. However, merely pressing buttons to play music can become monotonous, rendering the functionality of electronic books too simplistic, thereby hindering the enhancement of their amusement and interactivity.

In order to solve this problem, the embodiments of the present application provide a reading material sounding by induction. A hand of a child can extend into an inner chamber of a swingable member through an opening, and then an induction member 120 can detect the hand of the child and emit a trigger signal, and a receiving member 130 can trigger a sounding unit 150 to sound after receiving the trigger signal emitted by the induction member 120, thus improving interactivity and amusement for the child when reading and enhancing reading sensory experience for the child. The specific structures and functions of the reading material sounding by induction provided by the embodiments of the present application will be further explained below with reference to the words and drawings.

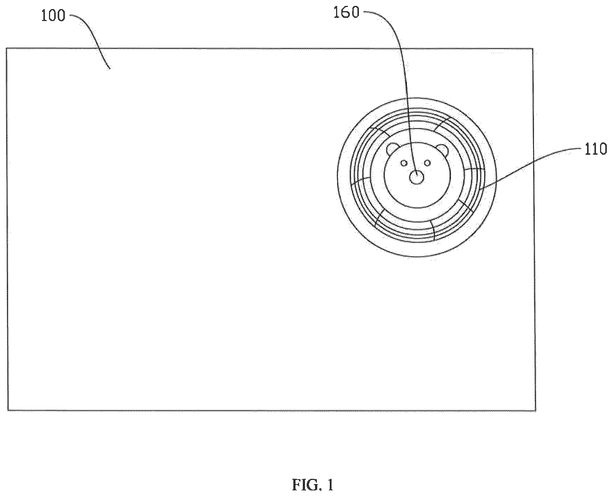

Referring to FIG. 1 to FIG, 4, the reading material sounding by induction provided according to some embodiments of the present application comprises a book body 100 and an inductive sounding assembly, where the book body 100 is provided with an opening extending through the book body, a swingable member 110 capable of swinging is arranged at the opening, and the swingable member 110 is provided with an inner chamber communicated with the opening. The inductive sounding assembly comprises an induction member 120, a receiving member 130, a power supply 140 and a sounding unit 150. The induction member 120 is arranged in the swingable member 110. The receiving member 130, the power supply 140 and the sounding unit 150 are all arranged in the book body 100. The receiving member 130 is electrically connected with the power supply 140, and the sounding unit 150 is electrically connected with the receiving member 130. When being triggered by a hand of a child, the induction member 120 can emit a trigger signal, and the receiving member 130 can receive the trigger signal to trigger the sounding unit 150 to sound.

In the reading material sounding by induction provided according to the invention when reading, the hand of the child can extend into the inner chamber of the swingable member 110 through the opening, and then the induction member 120 can detect the hand of the child and emit the trigger signal, and the receiving member 130 can trigger the sounding unit 150 to sound after receiving the trigger signal emitted by the induction member 120, thus improving the interactivity and amusement for the child when reading and enhancing the reading sensory experience for the child. Moreover, the hand of the child can drive the swingable member 110 to swing as a whole, which can not only increase the touch comfort of the child and enhance the sensory development, but also further improve the interactivity with the child.

It can be understood that the reading material sounding by induction may be not only the book body, but also a greeting card, a puzzle, a calendar, a wall calendar, a packaging box, and the like.

It should be noted that one or more induction members 120 may be provided. When multiple induction members 120 are provided, the number of the swingable members 110 may also be multiple. The multiple swingable members 110 may be arranged at different positions, and one or more induction members 120 may be arranged in each swingable member 110. The reading material sounding by induction may also comprise an external remote controller, and different modes can be controlled through the cooperation of the remote controller and the receiving member 130, so that the sounding unit 150 can emit different sounds.

According to some other embodiments of the present application, multiple swingable members 110 may be provided. The multiple swingable members 110 may be arranged at different positions of the book body 100, and one or more induction members 120 may be arranged in each swingable member 110, each swingable member 110 can be provided with the induction member 120, and each induction member 120 can trigger the same or different modes.

In the reading material sounding by induction provided according to some embodiments of the present application, the swingable member 110 is made of a soft material, and the swingable member 110 made of the soft material has a good touch, which can give the child a better touch experience.

It should be noted that the soft material may be cloth, rubber, EVA, sponge, cotton, nylon, hemp, leather, pure wool, rayon, silk, bamboo charcoal fiber, chemical spinning fiber, elastic fiber, acetate fiber, polyester fiber, textile, man-made fiber and the like alone or in combination.

Referring to FIG. 1, in the reading material sounding by induction provided according to some embodiments of the present application, an outer end of the swingable member 110 is provided with a styling member 160. The styling member 160 may swing with the swingable member 110 when the child swings the swingable member 110, which is beneficial to improving the interest.

It should be noted that the styling member 160 may be a doll (such as a bear, a dragonfly, and the like). The styling member 160 may also be various stickers and the like. The specific form and the specific shape of the styling member 160 are not limited here.

Referring to FIG. 1, in the reading material sounding by induction provided according to some embodiments of the present application, the swingable member 110 is capable of being accommodated in the opening. The swingable member 110 can be entirely accommodated in the opening of the book body 100 when not in use, which is convenient for accommodation.

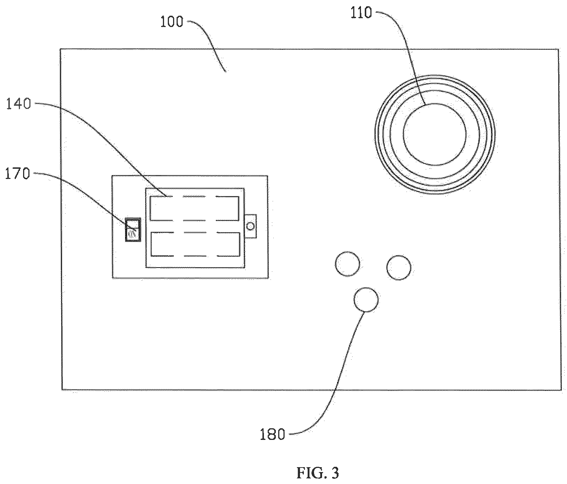

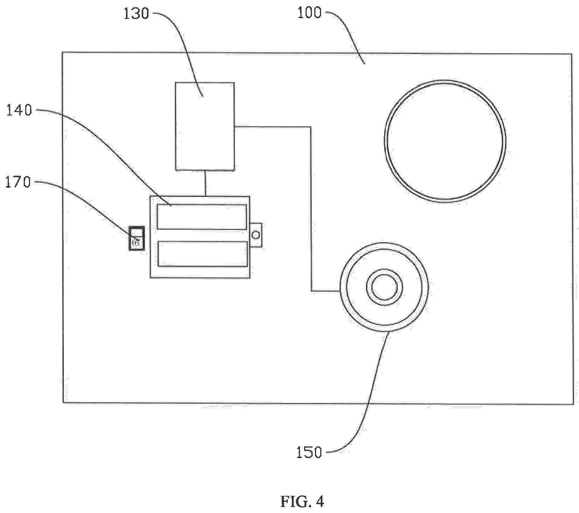

Referring to FIG. 3 and FIG. 4, in the reading material sounding by induction provided according to some embodiments of the present application, a back of the book body 100 is provided with a mounting groove, and the power supply 140 is mounted in the mounting groove. The power supply 140 is fixed in a stable and reliable way, and an outside of the book body 100 can be kept flat, which is convenient for transportation and accommodation.

Referring to FIG. 3 and FIG. 4, in the reading material sounding by induction provided according to some embodiments of the present application, a cover is arranged at the back of the book body 100, and the cover is configured to cover an opening of the mounting groove to maintain the power supply 140 in the mounting groove. The cover can protect the power supply 140 in the sealed groove while fixing the power supply 140, and can prevent the power supply 140 from being damaged due to bumping during transportation or use.

Referring to FIG. 3 and FIG. 4, in the reading material sounding by induction provided according to some embodiments of the present application, a switch 170 for controlling on-off of the power supply 140 is arranged at the back of the book body 100. The on-off of the power supply 140 can be controlled by toggling the switch 170, which is convenient for users to cope with different scenarios.

Referring to FIG. 3, in the reading material sounding by induction provided according to some embodiments of the present application, a rear side of the book body 100 is provided with one or more sound outlets 180, and the sounding unit 150 is arranged towards the sound outlets 180, so that the sound of the sounding unit 150 can be clearly transmitted to the outside through the sound outlets 180, which is beneficial to improving the use experience for the child.

In the reading material sounding by induction provided according to some embodiments of the present application, an optical source and/or a vibrating member (not shown in the figure) are/is arranged in the book body 100. The optical source and/or the vibrating member are/is electrically connected with the receiving member 130. When the induction member 120 is triggered by the hand of the child, the receiving member 130 can receive the trigger signal to trigger the optical source and/or the vibrating member to respond. The response of the optical source and/or the vibrating member can further improve the interactivity with the child and enhance the amusement for the child when reading.

In the reading material sounding by induction provided according to some embodiments of the present application, the inductive sounding assembly further comprises a changeover switch (not shown in the figure). The changeover switch is electrically connected to the sounding unit 150, and a sounding mode of the sounding unit 150 is capable of being controlled by the changeover switch. With the cooperation of the changeover switch and the sounding unit 150, different sounding scenarios can be simulated, which is beneficial to improving the amusement for the child when reading.

It should be noted that the optical source may be an LED lamp and can emit different colors of light. The reading material sounding by induction may be provided with one or more modes, and different modes for the reading material sounding by induction can be adjusted by the changeover switch, so that the sounding unit 150 can make different sounds and the optical source can emit different colors of light.

## Claims

1. A reading material sounding by induction, comprising:
a book body (100), provided with an opening extending through the book body (100), wherein a swingable member (110) made of a soft material is arranged at the opening, and the swingable member (110) is provided with an inner chamber communicating with the opening, wherein an outer end of the swingable member (110) is provided with a styling member (160); and
an inductive sounding assembly, comprising an induction member (120), a receiving member (130), a power supply (140) and a sounding unit (150), wherein the induction member (120) is arranged in the swingable member (110); the receiving member (130), the power supply (140) and the sounding unit (150) are all arranged in the book body (100), the receiving member (130) is electrically connected with the power supply (140), and the sounding unit (150) is electrically connected with the receiving member (130);
wherein, the inner chamber is configured to receive a hand of a user extending through the opening, such that the induction member (120) is able to detect the hand of the user, when being triggered, the induction member (120) is capable of emitting a trigger signal, and the receiving member (130) is capable of receiving the trigger signal to trigger the sounding unit (150) to sound.

2. The reading material sounding by induction according to claim 1, wherein the swingable member (110) is capable of being accommodated in the opening.

3. The reading material sounding by induction according to claim 1, wherein a back of the book body (100) is provided with a mounting groove, and the power supply (140) is mounted in the mounting groove.

4. The reading material sounding by induction according to claim 3, wherein a cover is arranged at the back of the book body (100), and the cover is configured to cover an opening of the mounting groove to maintain the power supply (140) in the mounting groove.

5. The reading material sounding by induction according to claim 3, wherein a switch (170) for controlling on-off of the power supply (140) is arranged at the back of the book body (100).

6. The reading material sounding by induction according to claim 3, wherein a rear side of the book body (100) is provided with a plurality of sound outlets (180), and the sounding unit (150) is arranged towards the sound outlets (180).

7. The reading material sounding by induction according to claim 1, wherein an optical source and/or a vibrating member are/is arranged in the book body (100), the optical source and/or the vibrating member are/is electrically connected with the receiving member (130), and when the induction member (120) is triggered, the receiving member (130) is capable of receiving the trigger signal, to trigger the optical source and/or the vibrating member to respond.

8. The reading material sounding by induction according to claim 1, wherein the inductive sounding assembly further comprises a changeover switch electrically connected to the sounding unit (150), and a sounding mode of the sounding unit (150) is capable of being controlled by the changeover switch.

## Patentansprüche

1. Lesegerät, das durch Induktion Töne erzeugt und Folgendes umfasst:
einen Körper des Buches (100), der eine Öffnung aufweist, die sich durch den Körper des Buches (100) erstreckt; wobei an der Öffnung ein Schwenkelement (110) aus einem flexiblen Material angeordnet ist und das Schwenkelement (110) mit einer inneren Kammer versehen ist, die mit der Öffnung in Verbindung steht; wobei ein äußeres Ende des Schwenkelements (110) mit einem Styling-Member (160) versehen ist; und
eine akustische durch Induktion Wiedergabevorrichtung, die Folgendes umfasst: ein Induktionselement (120), ein Empfangselement (130), eine Stromquelle (140) und eine akustische Wiedergabeeinheit (150); wobei das Induktionselement (120) in dem Schwenkelement (110) angebracht ist; wobei das Empfangselement (130), die Stromquelle (140) und die akustische Wiedergabeeinheit (150) alle in dem Körper des Buches (100) angebracht sind; wobei das Empfangselement (130) elektrisch mit der Stromquelle (140) verbunden ist; und wobei die akustische Wiedergabeeinheit (150) elektrisch mit dem Empfangselement (130) verbunden ist;
wobei die innere Kammer so ausgebildet ist, dass sie eine Benutzerhand aufnehmen kann, die sich durch die Öffnung erstreckt, und zwar derart, dass das Induktionselement (120) die Benutzerhand detektieren kann, wenn es ausgelöst wird; wobei das Induktionselement (120) in der Lage ist, ein Auslösesignal auszusenden; und wobei das Empfangselement (130) in der Lage ist, das Auslösesignal zu empfangen, um eine Tonwiedergabe durch die akustische Wiedergabeeinheit (150) auszulösen.

2. Lesegerät, das durch Induktion Töne erzeugt, nach Anspruch 1, wobei das Schwenkelement (110) in die Öffnung eingepasst werden kann.

3. Lesegerät, das durch Induktion Töne erzeugt, nach Anspruch 1, wobei der Körper des Buches (100) mit einer Befestigungsnut versehen ist; und wobei die Stromquelle (140) in der Befestigungsnut angebracht ist.

4. Lesegerät, das durch Induktion Töne erzeugt, nach Anspruch 3, wobei auf der Rückseite des Körper des Buches (100) ein Einband angebracht ist; und wobei der Einband so ausgebildet ist, dass er eine Öffnung der Befestigungsnut abdeckt, um die Stromquelle (140) in der Befestigungsnut zu halten.

5. Lesegerät, das durch Induktion Töne erzeugt, nach Anspruch 3, wobei auf der Rückseite des Körper des Buches (100) ein Schalter (170) zur Steuerung des Ein- und Ausschaltens der Stromquelle (140) angebracht ist.

6. Lesegerät, das durch Induktion Töne erzeugt, nach Anspruch 3, wobei eine Rückseite des Körper des Buches (100) eine Vielzahl von Lautsprecheröffnungen (180) aufweist; und wobei die akustische Wiedergabeeinheit (150) in Richtung der Lautsprecheröffnungen (180) ausgerichtet ist.

7. Lesegerät, das durch Induktion Töne erzeugt, nach Anspruch 1, wobei eine optische Quelle und/oder ein Schwingelement in dem Körper des Buches (100) angebracht ist/sind; wobei die optische Quelle und/oder das Schwingelement elektrisch mit dem Empfangselement (130) verbunden ist/sind; wobei das Empfangselement (130) bei Auslösung des Induktionselements (120) in der Lage ist, das Auslösesignal zu empfangen, um eine Reaktion der optischen Quelle und/oder des Schwingelements auszulösen.

8. Lesegerät, das durch Induktion Töne erzeugt, nach Anspruch 1, wobei die akustische durch Induktion Wiedergabevorrichtung ferner einen Auswahlschalter umfasst, der mit der akustischen Wiedergabeeinheit (150) verbunden ist; und wobei ein akustischer Wiedergabemodus der akustischen Wiedergabeeinheit (150) über den Auswahlschalter steuerbar ist.

## Revendications

1. Support de lecture émettant du son par induction, qui comprend :
un corps du livre (100) qui présente une ouverture qui s'étend à travers le corps du livre (100) ; dans lequel un élément pivotant (110) constitué d'un matériau souple est disposé à l'ouverture et l'élément pivotant (110) est muni d'une chambre interne qui mise en communication avec l'ouverture ; dans lequel une extrémité externe de l'élément pivotant (110) est munie d'un membre de style (160) ; et
un dispositif de restitution sonore par induction qui comprend un élément d'induction (120), un élément de réception (130), une source d'alimentation (140) et une unité de restitution sonore (150) ; dans lequel l'élément d'induction (120) est disposé dans l'élément pivotant (110) ; dans lequel l'élément de réception (130), la source d'alimentation (140) et l'unité de restitution sonore (150) sont tous disposés dans le corps du livre (100) ; dans lequel l'élément de réception (130) est relié par voie électrique à la source d'alimentation (140) ; et dans lequel l'unité de restitution sonore (150) est reliée par voie électrique à l'élément de réception (130) ;
dans lequel la chambre interne est configurée pour recevoir une main d'utilisateur qui s'étend à travers l'ouverture, d'une manière telle que l'élément d'induction (120) est capable de détecter la main de l'utilisateur, lorsqu'il est déclenché ; dans lequel l'élément d'induction (120) est capable d'émettre un signal de déclenchement ; et dans lequel l'élément de réception (130) est capable de recevoir le signal de déclenchement afin de provoquer une restitution d'un son de la part de l'unité de restitution sonore (150).

2. Support de lecture émettant du son par induction selon la revendication 1, dans lequel l'élément pivotant (110) est capable de venir se loger dans l'ouverture.

3. Support de lecture émettant du son par induction selon la revendication 1, dans lequel un dos du corps du livre (100) est muni d'une rainure de montage ; et dans lequel la source d'alimentation (140) est montée dans la rainure de montage.

4. Support de lecture émettant du son par induction selon la revendication 3, dans lequel une couverture est disposée à l'arrière du corps du livre (100) ; et dans lequel la couverture est configurée pour recouvrir une ouverture de la rainure de montage afin de maintenir la source d'alimentation (140) dans la rainure de montage.

5. Support de lecture émettant du son par induction selon la revendication 3, dans lequel un commutateur (170) destiné à commander la mise en circuit-hors circuit de la source d'alimentation (140) est disposé à l'arrière du corps du livre (100).

6. Support de lecture émettant du son par induction selon la revendication 3, dans lequel un côté arrière du corps du livre (100) présente une multitude d'ouvertures pour haut-parleur (180) ; et dans lequel l'unité de restitution sonore (150) est orientée dans la direction des ouvertures pour haut-parleur (180).

7. Support de lecture émettant du son par induction selon la revendication 1, dans lequel une source optique et/ou un élément vibrant est/sont disposé(s) dans le corps du livre (100) ; dans lequel la source optique et/ou l'élément vibrant est/sont relié(s) par voie électrique à l'élément de réception (130) ; et dans lequel, lorsque l'élément d'induction (120) est déclenché, l'élément de réception (130) est capable de recevoir le signal de déclenchement dans le but de provoquer une réponse de la source optique et/ou de l'élément vibrant.

8. Support de lecture émettant du son par induction selon la revendication 1, dans lequel le dispositif de restitution sonore par induction comprend en outre un commutateur de sélection qui est relié à l'unité de restitution sonore (150) ; et dans lequel un mode de restitution sonore de l'unité de restitution sonore (150) est capable d'être commandé par le commutateur de sélection.
